Europäisches Patentamt

European Patent Office

Office européen des brevets

(19)

(11) **EP 1 107 228 A2**

(12) **EUROPÄISCHE PATENTANMELDUNG**

(43) Veröffentlichungstag:
**13.06.2001   Patentblatt 2001/24**

(51) Int Cl.7: **G10L 15/18**

(21) Anmeldenummer: **00204115.0**

(22) Anmeldetag: **22.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **30.11.1999   DE 19957430**

(71) Anmelder:
• **Philips Corporate Intellectual Property GmbH**
  **52064 Aachen (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder: **Peters, Jochen,**
  **Philips Corp. Intel. Property GmbH**
  **52064 Aachen (DE)**

(74) Vertreter: **Volmer, Georg, Dipl.-Ing. et al**
  **Philips Corporate Intellectual Property GmbH,**
  **Habsburgerallee 11**
  **52064 Aachen (DE)**

(54) **Verfahren zur Erzeugung eines Maximum-Entropie-Sprachmodells**

(57)    Die Erfindung betrifft ein Verfahren zur Erzeugung eines Maximum-Entropie-Sprachmodells für ein Spracherkennungssystem.

Um eine Verbesserung der statistischen Eigenschaften des erzeugten Sprachmodells zu erreichen, wird vorgeschlagen, dass

- durch Auswertung eines Trainingskorpus erste Wahrscheinlichkeitswerte $p_{ind}(w \mid h)$ für N-Gramme mit $N \geq 0$ gebildet werden;
- eine Schätzung von zweiten Wahrscheinlichkeitswerten $p_\lambda (w \mid h)$, die Sprachmodellwerte des Maximum-Entropie-Sprachmodells repräsentieren, in Abhängigkeit von den ersten Wahrscheinlichkeitswerten durchgeführt wird;
- Randwerte $m_\alpha$ entsprechend der Gleichung

$$m_\alpha = \sum_{(h,w)} p_{ind} (w \mid h) \cdot N(h) \cdot f_\alpha(h,w)$$

bestimmt werden, wobei $N(h)$ die Auftrittshäufigkeit der jeweiligen Vergangenheit h im Trainingskorpus und fa(h, w) eine Filterfunktion ist, die nur für bestimmte durch den Index a gekennzeichnete und a priori vorgegebene N-Gramme einen von Null verschiedenen Wert und ansonsten den Wert Null aufweist;
- eine Iteration von Sprachmodellwerten des Maximum-Entropie-Sprachmodells solange durchgeführt wird, bis im n-ten Iterationsschritt nach der Formel

$$m_\alpha^{(n)} = \sum_{(h,w)} p_\lambda^{(n)} (w \mid h) \cdot N(h) \cdot f_\alpha(h,w)$$

ermittelte Werte $m_\alpha^{(n)}$ nach einem vorgebbaren Konvergenzkriterium hinreichend genau den Randwerten $m_\alpha$ angenähert sind.

**Beschreibung**

Die Erfindung betrifft ein Verfahren zur Erzeugung eines Maximum-Entropie-Sprachmodells für ein Spracherkennungssystem.

Bei der Erzeugung von Sprachmodellen für Spracherkennungssysteme stellt sich das Problem, dass die Trainingskorpora nur begrenzte Mengen an Trainingsmaterial enthalten. Wahrscheinlichkeiten für sprachliche Äußerungen, die allein aus den entsprechenden Auftrittshäufigkeiten im Trainingskorpus abgeleitet sind, werden deshalb Glättungsprozeduren unterworfen, beispielsweise bei backing-off-Techniken. Doch nutzen backing-off-Sprach-modelle den statistischen Informationsgehalt von verfügbaren Trainingsdaten regelmäßig nicht optimal aus, da nicht gesehene Vergangenheiten von N-Grammen lediglich dadurch kompensiert werden, dass das jeweils betrachtete N-Gramm soweit verkürzt wird, bis man eine von Null verschiedene Auftrittshäufigkeit im Trainingskorpus erhält. Mit Maximum-Entropie-Sprachmodellen kann diesem Problem entgegengewirkt werden (vgl. R. Rosenfeld, "A maximum entropy approach to adaptive statistical language modeling", Computer, Speech and Language, 1996, Seiten 187-228). Mittels derartiger Sprachmodelle können insbesondere sowohl Auftrittshäufigkeiten von N-Grammen als auch von Lücken-N-Grammen im Trainingskorpus zur Schätzung von Sprachmodellwahrscheinlichkkeiten verwendet werden, was bei backing-off-Sprachmodellen nicht der Fall ist. Allerdings tritt bei der Erzeugung eines Maximum-Entropie-Sprachmodells das Problem auf, geeignete Randwerte zu schätzen, von deren Wahl die iterierten Sprachmodellwerte des Maximum-Entropie-Sprachmodells abhängen. Die Sprachmodellwahrscheinlichkeiten $p_\lambda(w|h)$ eines solchen Sprachmodells (w: Vokabularelement; h: Vergangenheit von Vokabularelementen bezüglich w) sind während eines Trainings so zu bestimmen, dass sie Randwertgleichungen der Form

$$m_\alpha = \sum_{(h,w)} p_\lambda(w\,|\,h) \cdot N(h) \cdot f_\alpha(h,w)$$

möglichst gut erfüllen. Hierbei stellt $m_\alpha$ jeweils einen Randwert für eine a priori festzusetzende Bedingung $\alpha$ dar, von deren Erfüllung es abhängt, ob die Filterfunktion $f_\alpha(h, w)$ den Wert Eins oder den Wert Null annimmt. Eine Bedingung $\alpha$ fragt dabei ab, ob eine betrachtete Folge (h, w) von Vokabularelementen ein bestimmtes N-Gramm (der Begriff N-Gramm soll auch Lücken-N-Gramme umfassen) ist oder auf ein bestimmtes N-Gramm ($N \geq 1$) endet, wobei N-Gramm-Elemente auch Klassen sein können, die in besonderem Bezug zueinander stehende Vokabularelemente zusammenfassen. $N(h)$ gibt die Auftrittshäufigkeit der Vergangenheit h im Trainingskorpus an.

Unter allen Wahrscheinlichkeitsverteilungen, welche die Randwertgleichungen erfüllen, wird bei der Maximum-Entropie-Modellierung diejenige Verteilung ausgewählt, welche die bedingte Entropie

$$\cdot \sum_h N(h) \sum_w p_\lambda(w|h) \log p_\lambda(w|h)$$

maximiert. Die spezielle Verteilung hat die Form

$$p_\lambda(w\,|\,h) = \frac{1}{Z_\lambda(h)} \exp\left\{\sum_\alpha \lambda_\alpha f_\alpha(h,w)\right\} \quad \text{mit} \quad Z_\lambda(h) = \sum_{v\in V} \exp\left\{\sum_\alpha \lambda_\alpha f_\alpha(h,v)\right\}$$

mit geeigneten Parametern $\lambda_\alpha$.

Bei der Iteration eines Maximum-Entropie-Sprachmodells wird insbesondere der sogenannte GIS-Algorithmus ("Generalized Iterative Scaling") eingesetzt, dessen Grundstruktur in J.N.Darroch, D. Ratcliff: "Generalized iterative scaling for log-linear models", The Annals of Mathematical Statistics, 43(5), Seiten 1470-1480, 1972 beschrieben ist. Ein Ansatz zur Bestimmung der erwähnten Randwerte $m_\alpha$ beruht beispielsweise auf der Maximierung der Wahrscheinlichkeit des verwendeten Trainingskorpus, was auf Randwerte $m_\alpha = N(\alpha)$ führt, d.h. es wird ermittelt, wie häufig die Bedingungen $\alpha$ im Trainingskorpus erfüllt sind. Dies ist beispielsweise in S.A. Della Pietra, V. J. Della Pietra, J. Lafferty, "Inducing Features of random fields", Technical report, CMU-CS-95-144, 1995 beschrieben. Die Randwerte $m_\alpha$ erzwingen jedoch häufig, dass einige Sprachmodellwahrscheinlichkeitswerte $p_\lambda(w|h)$ der durch die Randwertgleichungen eingeschränkten Modelle verschwinden (d.h. zu Null werden), und zwar insbesondere für im Trainingskorpus nicht gesehene Folgen (h, w). Verschwindende Sprachmodellwahrscheinlichkeitswerte $p_\lambda(w|h)$ sind aber aus zwei Gründen zu vermeiden: Einerseits könnte ein Spracherkennungssystem in solchen Fällen Sätze mit der Wortfolge (h, w) nicht erkennen, auch wenn diese plausible Erkennungsergebnisse wären, nur weil sie nicht im Trainingskorpus vorkommen. Andererseits widersprechen Werte $p_\lambda(w|h) = 0$ der funktionalen Gestalt der Lösung aus der oben angeführten Gleichung für $p_\lambda(w|h)$, solange die Parameter $\lambda_\alpha$ auf endliche Werte beschränkt sind. Diese sogenannte Inkonsistenz (vgl. J.N.Darroch, D. Ratcliff am oben genannten Ort) verhindert die Lösung der Randwertgleichungen mit allen bisher bekannten Trainingsverfahren.

Der Erfindung liegt nun die Aufgabe zugrunde, ein Verfahren zur Erzeugung von Maximum-Entropie-Sprachmodellen so auszugestalten, das eine Verbesserung der statistischen Eigenschaften des erzeugten Sprachmodells erreicht wird.

Die Aufgabe wird dadurch gelöst, dass

- durch Auswertung eines Trainingskorpus erste Wahrscheinlichkeitswerte $p_{ind}(w|h)$ für N-Gramme mit $N \geq 0$ gebildet werden;
- eine Schätzung von zweiten Wahrscheinlichkeitswerten $p_\lambda(w|h)$, die Sprachmodellwerte des Maximum-Entropie-Sprachmodells repräsentieren, in Abhängigkeit von den ersten Wahrscheinlichkeitswerten durchgeführt wird;
- Randwerte $m_\alpha$ entsprechend der Gleichung

$$m_\alpha = \sum_{(h,w)} p_{ind}(w|h) \cdot N(h) \cdot f_\alpha(h,w)$$

bestimmt werden, wobei $N(h)$ die Auftrittshäufigkeit der jeweiligen Vergangenheit $h$ im Trainingskorpus und $f_\alpha(h, w)$ eine Filterfunktion ist, die nur für bestimmte durch den Index $\alpha$ gekennzeichnete und a priori vorgegebene N-Gramme einen von Null verschiedenen Wert und ansonsten den Wert Null aufweist;
- eine Iteration von Sprachmodellwerten des Maximum-Entropie-Sprachmodells solange durchgeführt wird, bis im n-ten Iterationsschritt nach der Formel

$$m_\alpha^{(n)} = \sum_{(h,w)} p_\lambda^{(n)}(w|h) \cdot N(h) \cdot f_\alpha(h,w)$$

ermittelte Werte $m_\alpha^{(n)}$ nach einem vorgebbaren Konvergenzkriterium hinreichend genau den Randwerten $m_\alpha$ angenähert sind.

Eine derartige Sprachmodellbildung führt auf ein Sprachmodell, welches die Statistik des Trainingskorpus besser auf die Statistik der zu erkennenden Sprache verallgemeinert, indem die Schätzung der Wahrscheinlichkeiten $p_\lambda(w|h)$ für ungesehene Wortübergänge $(h, w)$ unterschiedliche Statistiken des Trainingskorpus ausnutzt: Neben den kürzerreichweitigen N-Grammen (wie bei backing-off-Sprachmodellen) können dann auch Lücken-N-Gramm-Statistiken und Korrelationen zwischen Wort-Klassen bei der Schätzung der Werte $p_\lambda(w|h)$ berücksichtigt werden.

Insbesondere ist vorgesehen, dass zur Iteration der Sprachmodellwerte des Maximum-Entropie-Sprachmodells, d.h. zum iterativen Training, der GIS-Algorithmus verwendet wird. Die ersten Wahrscheinlichkeitswerte $p_{ind}(w|h)$ sind vorzugsweise backing-off-Sprachmodellwahrscheinlichkeitswerte.

Die Erfindung bezieht sich auch auf ein Spracherkennungssystem mit einem entsprechend hergestellten Sprachmodell.

Ausführungsbeispiele der Erfindung werden im folgenden unter Verwendung einer Figur näher erläutert.

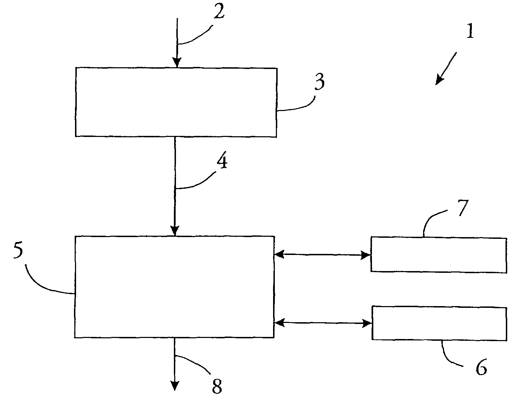

Die Figur zeigt ein Spracherkennungssystem 1, dem an seinem Eingang 2 in elektrischer Form vorliegende Sprachsignale zugeführt werden. Ein Funktionsblock 3 faßt eine akustische Analyse zusammen, die dazu führt, dass sukzessive am Ausgang 4 Merkmalsvektoren ausgegeben werden, die die Sprachsignale beschreiben. Bei der akustischen Analyse werden die in elektrischer Form vorliegenden Sprachsignale abgetastet und quantisiert und anschließend in Rahmen zusammengefaßt. Aufeinanderfolgende Rahmen überlappen sich vorzugsweise dabei teilweise gegenseitig. Für jeden einzelnen Rahmen wird ein Merkmalsvektor gebildet. Der Funktionsblock 5 faßt die Suche nach der Folge von Sprachvokabularelementen zusammen, die bei der gegebenen Eingabe der Folge von Merkmalsvektoren am wahrscheinlichsten ist. Wie bei Spracherkennungssystemen üblich, wird hierzu die Wahrscheinlichkeit des Erkennungsergebnisses mit Hilfe der sogenannten Bayes-Formel maximiert. Hierbei geht sowohl ein akustisches Modell der Sprachsignale (Funktionsblock 6) als auch ein linguistisches Sprachmodell (Funktionsblock 7) in die Verarbeitung gemäß Funktionsblock 5 ein. Das akustische Modell gemäß Funktionsblock 6 beinhaltet die übliche Verwendung von sogenannten HMM-Modellen ("Hidden Markov Models") für die Modellierung einzelner Vokabularelemente oder auch einer Kombination mehrerer Vokabularelemente. Das Sprachmodell (Funktionsblock 7) enthält geschätzte Wahrscheinlichkeitswerte für Vokabularelemente oder Folgen von Vokabularelementen. Hierauf bezieht sich die im folgenden näher erläuterte Erfindung, die dazu führt, dass die Fehlerrate des am Ausgang 8 ausgegebenen Erkennungsergebnisses reduziert wird. Außerdem wird die Perplexität des Systems reduziert.

Beim erfindungsgemäßen Spracherkennungssystem 1 wird ein Sprachmodell mit Wahrscheinlichkeitswerten $p_\lambda(w|h)$, d.h. bedingten N-Gramm-Wahrscheinlichkeiten mit $N \geq 0$ für N-Gramme $(h, w)$ verwendet (mit h als Vergangenheit aus N-1 Elementen bezüglich des Vokabularelementes w bezeichnet), das auf einem Maximum-Entropie-Ansatz beruht. Hierbei wird die gesuchte Verteilung durch bestimmte Randverteilungen eingeschränkt, und unter diesen Randbedingungen wird das Modell maximaler Entropie ausgewählt. Die Randbedingungen können sich sowohl auf N-Gramme verschiedener Länge (N = 1, 2, 3, ...) als auch auf Lücken-N-Gramme beziehen, z. B. auf Lücken-Bigramme der Form $(u, *, w)$, wobei * ein Platzhalter für mindestens ein beliebiges N-Gramm-Element zwischen den Elementen u und w ist. Ebenso können N-Gramm-Elemente Klassen C sein, die Vokabularelemente zusammenfassen, die einen besonderen Bezug zueinander haben, z. B. indem sie grammatikalische oder semantische Verwandtschaften zeigen.

Die Wahrscheinlichkeiten $p_\lambda(w|h)$ werden in einem Training auf der Grundlage eines Trainingskorpus (z. B. NAB-Korpus - North American Business News) gemäß folgender Formel geschätzt:

$$p_\lambda(w \mid h) = \frac{1}{Z_\lambda(h)} \exp\left\{\sum_\alpha \lambda_\alpha f_\alpha(h,w)\right\} \quad \text{mit} \quad Z_\lambda(h) = \sum_{v \in V} \exp\left\{\sum_\alpha \lambda_\alpha f_\alpha(h,v)\right\} \qquad (1)$$

Die Güte des so gebildeten Sprachmodells wird entscheidend von der Wahl von Randwerten $m_\alpha$ bestimmt, von denen die zu bestimmenden Wahrscheinlichkeitswerte $p_\lambda(w|h)$ für das Sprachmodell abhängen, was durch die folgende Formel ausgedrückt wird:

$$m_\alpha = \sum_{(h,w)} p_\lambda(w \mid h) \cdot N(h) \cdot f_\alpha(h,w) \qquad (2)$$

Die Randwerte $m\alpha$ werden mittels eines bereits berechneten und vorliegenden Sprachmodells mit den Sprachmodellwahrscheinlichkeiten $p_{ind}(w|h)$ geschätzt. Dazu wird Formel (2) verwendet, in der lediglich $p_\lambda(w|h)$ durch $p_{ind}(w|h)$ zu ersetzen ist, so dass eine Schätzung der $m_\alpha$ anhand der Formel

$$m_\alpha = \sum_{(h,w)} p_{ind}(w \mid h) \cdot N(h) \cdot f_\alpha(h,w) \qquad (3)$$

erfolgt.

Die Werte $p_{ind}(w|h)$ sind insbesondere Wahrscheinlichkeitswerte eines auf der Basis des zugrundegelegten Trainingskorpus ermittelten sogenannten backing-off-Sprachmodells (siehe beispielsweise R. Kneser, H. Ney, "Improved backing-off for M-gram language modeling", ICASSP 1995, Seiten 181-185). Die Werte $p_{ind}(w|h)$ können aber auch anderen als gegeben vorauszusetzenden (schon berechneten) Sprachmodellen entnommen werden, wie sie beispielsweise in A. Nadas: "Estimation of Probabilities in the Language Model of the IBM Speech Recognition System", IEEE Trans. on Acoustics, Speech and Signal Proc., Vol. ASSP-32, Seiten 859-861, Aug. 1984 und in S.M. Katz: "Estimation of Probabilities from Sparse Data for the Language Model Component of a Speech Recognizer", IEEE Trans. on Acoustics, Speech and Signal Proc., Vol. ASSP-35, Seiten 400-401, March 1987, beschrieben sind.

$N(h)$ gibt die Häufigkeit der jeweiligen Historie h im Trainingskorpus an. $f_\alpha(h, w)$ ist eine zu einer Bedingung $\alpha$ korrespondierende Filterfunktion, die einen von Null verschiedenen Wert (hier den Wert Eins) hat, wenn die Bedingung $\alpha$ erfüllt ist, und ansonsten gleich Null ist. Die Bedingungen $\alpha$ und die zugehörigen Filterfunktionen $f_\alpha$ werden heuristisch für das jeweilige Trainingskorpus festgelegt. Insbesondere wird hierbei ausgewählt, für welche Wort- oder Klassen-N-Gramme oder Lücken-N-Gramme die Randwerte fixiert werden.

Bedingungen $\alpha$, bei denen $f_\alpha(h, w)$ den Wert Eins hat, sind vorzugsweise:

- ein betrachtete N-Gramm endet auf ein bestimmtes Vokabularelement w;
- ein betrachtetes N-Gramm $(h, w)$ endet auf ein Vokabularelement w, das einer bestimmten Klasse C angehört, die Vokabularelemente zusammenfaßt, die einen besonderen Bezug zueinander haben (s.o.);
- ein betrachtetes N-Gramm $(h, w)$ endet auf ein bestimmtes Bigramm $(v, w)$ oder ein Lücken-Bigramm $(u, *, w)$ oder ein bestimmtes Trigramm $(u, v, w)$, etc.;
- ein betrachtetes N-Gramm $(h, w)$ endet auf ein Bigramm $(v, w)$ oder ein Lücken-Bigramm $(u, *, w)$, etc., wobei die Vokabularelemente u, v und w in bestimmten vorgegebenen Wortklassen C, D und E liegen.

Neben der Ableitung aller Randwerte $m_\alpha$ nach Gleichung (3) aus einem vorgegebenen a priori- Sprachmodell mit Wahrscheinlichkeitswerten $p_{ind}(w|h)$ können für bestimmte Gruppen von Bedingungen $\alpha$ getrennt jeweils ein eigenes a priori-Sprachmodell mit Wahrscheinlichkeitswerten $p_{ind}(w|h)$ vorgegeben werden, wobei die Randwerte nach Gleichung (3) in diesem Fall dann getrennt für jede Gruppe aus dem zugehörigen a priori-Sprachmodell berechnet werden. Beispiele für mögliche Gruppen können insbesondere gebildete werden durch:

- Wort-Unigramme, Wort-Bigramme, Wort-Trigramme;
- Wort-Lücken-1-Bigramme (mit einer einem einzigen Wort entsprechenden Lücke);
- Wort-Lücken-2-Bigramme (mit einer zwei Worten entsprechenden Lücke);
- Klassen-Unigramme, Klassen-Bigramme, Klassen-Trigramme;
- Klassen-Lücken-1-Bigramme;
- Klassen-Lücken-2-Bigramme.

Die Bestimmung der Sprachmodell-Parameter $\lambda_\alpha$ erfolgt hier mit Hilfe des GIS-Algorithmus, dessen Grundstruktur beispielsweise von J.N.Darroch, D. Ratcliff beschrieben wurde. Hier wird dabei ein Wert M mit

$$M = \max_{(h,w)}\left\{\sum_\alpha f_\alpha(h,w)\right\} \qquad (4)$$

angesetzt. Weiterhin soll N die Größe des verwendeten Trainingskorpus, d.h. die Anzahl im Trainingskorpus enthaltenen Vokabularelemente bezeichnen. Damit läßt sich der verwendete GIS-Algorithmus wie folgt schreiben:

Schritt 1: Starten mit irgendeinem Startwert $p_\lambda^{(0)}(w|h)$

Schritt 2: Aktualisierung der Randwerte im n-ten Durchlauf der Iterationsschleife:

$$m_\alpha^{(n)} = \sum_{(h,w)} p_\lambda^{(n)}(w|h)\cdot N(h)\cdot f_\alpha(h,w) \qquad (5)$$

wobei $P_\lambda^{(n)}(w|h)$ aus den in Schritt 3 ermittelten Parametern $\lambda_\alpha^{(n)}$ durch Einsetzen in Formel (1) berechnet wird.

Schritt 3: Aktualisierung der Parameter $\lambda_\alpha$:

$$\lambda_\alpha^{(n+1)} = \lambda_\alpha^{(n)} + \frac{1}{M}\cdot\log\left(\frac{m_\alpha}{m_\alpha^{(n)}}\right) - \frac{1}{M}\cdot\log\left(\frac{M\cdot N-\sum_\beta m_\beta}{M\cdot N-\sum_\beta m_\beta^{(n)}}\right) \qquad (6)$$

wobei der zuletzt subtrahierte Term für den Fall entfällt, dass für M gilt:

$$M = \sum_\beta f_\beta(h,w) \quad \forall\ (h,w) \qquad (7)$$

$m_\alpha$ bzw. $m_\beta$ ($\beta$ ist nur eine andere Laufvariable) sind die gemäß Formel (3) auf der Basis der Wahrscheinlichkeitswerte $p_{ind}(w|h)$ geschätzten Randwerte.

Schritt 4: Fortsetzung des Algorithmus mit Schritt 2 bis zur Konvergenz des Algorithmus.

Dabei wird unter Konvergenz des Algorithmus verstanden, dass der Betrag der Differenz zwischen dem geschätzten $m_\alpha$ aus Formel (3) und dem iterierten Wert $m_\alpha^{(n)}$ kleiner als ein vorgebbarer und hinreichend kleiner Grenzwert $\varepsilon$ ist.

Alternativ zur Verwendung des GIS-Algorithmus kann jedes Verfahren eingesetzt werden, das die Maximum-Entropie-Lösung zu vorgegebenen Randbedingungen berechnet, beispielsweise das Improved Iterative Scaling Verfahren, welchen von S.A. Della Pietra, V. J. Della Pietra, J. Lafferty (s. o. am angeführten Ort) beschrieben wurde.

**Patentansprüche**

1. Verfahren zur Erzeugung eines Maximum-Entropie-Sprachmodells für ein Spracherkennungssystem, bei dem

   - durch Auswertung eines Trainingskorpus erste Wahrscheinlichkeitswerte $p_{ind}(w|h)$ für N-Gramme mit $N \geq 0$ gebildet werden;
   - eine Schätzung von zweiten Wahrscheinlichkeitswerten $p_\lambda(w|h)$, die Sprachmodellwerte des Maximum-Entropie-Sprachmodells repräsentieren, in Abhängigkeit von den ersten Wahrscheinlichkeitswerten durchgeführt wird;
   - Randwerte $m_\alpha$ entsprechend der Gleichung

$$m_\alpha = \sum_{(h,w)} p_{ind}(w|h) \cdot N(h) \cdot f_\alpha(h,w)$$

   bestimmt werden, wobei $N(h)$ die Auftrittshäufigkeit der jeweiligen Vergangenheit h im Trainingskorpus und $f_\alpha(h, w)$ eine Filterfunktion ist, die nur für bestimmte durch den Index $\alpha$ gekennzeichnete und a priori vorgegebene N-Gramme einen von Null verschiedenen Wert und ansonsten den Wert Null aufweist;
   - eine Iteration von Sprachmodellwerten des Maximum-Entropie-Sprachmodells solange durchgeführt wird, bis im n-ten Iterationsschritt nach der Formel

$$m_\alpha^{(n)} = \sum_{(h,w)} p_\lambda^{(n)}(w|h) \cdot N(h) \cdot f_\alpha(h,w)$$

   ermittelte Werte $m_\alpha^{(n)}$ nach einem vorgebbaren Konvergenzkriterium hinreichend genau den Randwerten $m_\alpha$ angenähert sind.

2. Verfahren nach Anspruch 1,
   dadurch gekennzeichnet,
   dass zur Iteration der Sprachmodellwerte des Maximum-Entropie-Sprachmodells der GIS-Algorithmus verwendet wird.

3. Verfahren nach Anspruch 1 oder 2,
   dadurch gekennzeichnet,
   dass ein backing-off-Sprachmodell zur Lieferung der ersten Wahrscheinlichkeitswerte vorgesehen ist.

4. Verfahren nach Anspruch 1,
   dadurch gekennzeichnet,
   dass zur Berechnung der Randwerte $m_\alpha$ für verschiedene Untergruppen, die Gruppen bestimmter $\alpha$ zusammenfassen, verschiedene erste Wahrscheinlichkeitskeitswerte $p_{ind}(w|h)$ verwendet werden.

5. Spracherkennungssystem mit einem nach einem der Ansprüche 1 bis 4 erzeugten Sprachmodell.